# FASCICULE DE BREVET EUROPEEN

(11) **EP 1 561 364 B1**
(45) Date de publication et mention de la délivrance du brevet: **02.09.2009**
(21) Numéro de dépôt: 03782542.9
(22) Date de dépôt: 10.11.2003
(51) Int. Cl.: H05B 3/28, F24D 13/02, B29C 70/52

(54) **PROCEDE DE FABRICATION D'UNE STRUCTURE DE CHAUFFAGE PAR RAYONNEMENT.**
VERFAHREN ZUR HERSTELLUNG EINER STRUKTUR ZUR STRAHLUNGSHEIZUNG
METHOD FOR MAKING A RADIATION HEATING STRUCTURE

(30) Priorité: 13.11.2002 FR 0214180
(43) Date de publication de la demande: 10.08.2005
(73) Titulaire: Electricité de France, Société Anonyme, 75008 Paris (FR)
(72) Inventeur: KUNTZ, Marc, F-77250 Veneux-Les-Sablons (FR)
(74) Mandataire: Hassine, Albert
(86) Numéro de dépôt international: PCT/FR2003/003348
(87) Numéro de publication internationale: WO 2004/047492

(56) Documents cités:
- EP-A- 0 959 306
- WO-A-00/30406
- US-A- 4 888 472
- US-A- 5 783 013

## Description

L'invention concerne le domaine des éléments de chauffage, tels que des panneaux de chauffage par rayonnement.

Des structures chauffantes de ce type, sensiblement on forme de plaque, connues notamment de EP-0959306, comportent une couche chauffante comprenant au moins une résistance électrique destinée à être alimentée électriquement pour produire un chauffage par effet Joule. Cette couche chauffante est avantageusement fixée entre deux couches de renforts qui sont préférentiellement des isolants électriques.

Pour obtenir une telle structure chauffante, un procédé connu notamment de WO-00/30406 prévoit la fixation de la couche chauffante entre les deux couches de renforts en injectant une résine que l'on polymérise par élévation de température, ce qui permet d'ailleurs de rigidifier la structure chauffante obtenue.

Pour conférer à cette structure des propriétés de rayonnement thermique, la résine injectée, est chargée en additifs rayonnants, tels que des particules de plâtres.

Cependant, la résine ainsi chargée, une fois polymérisée, ne permet pas de coller de façon satisfaisante les renforts et/ou la résistance électrique précités et le décollement d'un élément de la structure chauffante, en service, a souvent été observé.

La présente invention vient améliorer la situation.

### Elle propose à cet effet un procédé conforme à la revendication 1.

Avantageusement, la structure chauffante obtenue par la mise en oeuvre du procédé est sensiblement en forme de plaque, avec une face isolante et une face, opposée, chauffante par rayonnement. Les termes "en forme de plaque" désignent aussi bien une forme plane qu'une forme sensiblement courbe, ou encore cintrée.

Le caractère isolant de la couche thermiquement isolante est avantageusement conféré par une feuille isolante que l'on introduit dans le moule, avec la stratification précitée et en regard de la seconde paroi par laquelle est injectée la seconde résine plus fluide. En complément ou en variante, la seconde résine peut comporter des additifs isolants et, malgré la présence de tels additifs isolants, conserver une fluidité plus grande que celle de la première résine.

Le procédé au sens de l'invention peut être mis en oeuvre grâce à un moule de pultrusion comportant :
- une première paroi et une seconde paroi opposée à ladite première paroi,
- des premiers moyens d'injection d'une première résine polymérisable dans le moule et chargée en additifs minéraux, par une première ouverture du moule formée dans ladite première paroi,
- des seconds moyens d'injection d'une seconde résine polymérisable dans le moule et plus fluide que la première résine, pat une seconde ouverture formée dans ladite seconde paroi, et
- une extrémité d'entrée et une extrémité de sortie, entre lesquelles la stratification précitée peut progresser.

Un moule de ce type est décrit dans US-5,783,013 mais ne traite pas d'une quelconque insertion d'additifs rayonnants, ni du problème résultant d'une insertion de tels additifs rayonnants, ni de leur diffusion avec les risques de décollement qu'encourt la structure obtenue.

D'autres caractéristiques et avantages de l'invention apparaîtront à l'examen de la description détaillée ci-après, et des dessins annexés sur lesquels :
- la figure 1 représente schématiquement une structure chauffante S au sens de la présente invention ;
- la figure 2 représente schématiquement une vue en coupe transversale (selon la ligne de coupe II-II) de la structure chauffante S de la figure 1 ;
- la figure 3 représente schématiquement une installation de pultrusion pour la fabrication de structures chauffantes ; et
- la figure 4 représente schématiquement la progression de la structure chauffante S dans un moule de pultrusion 1.

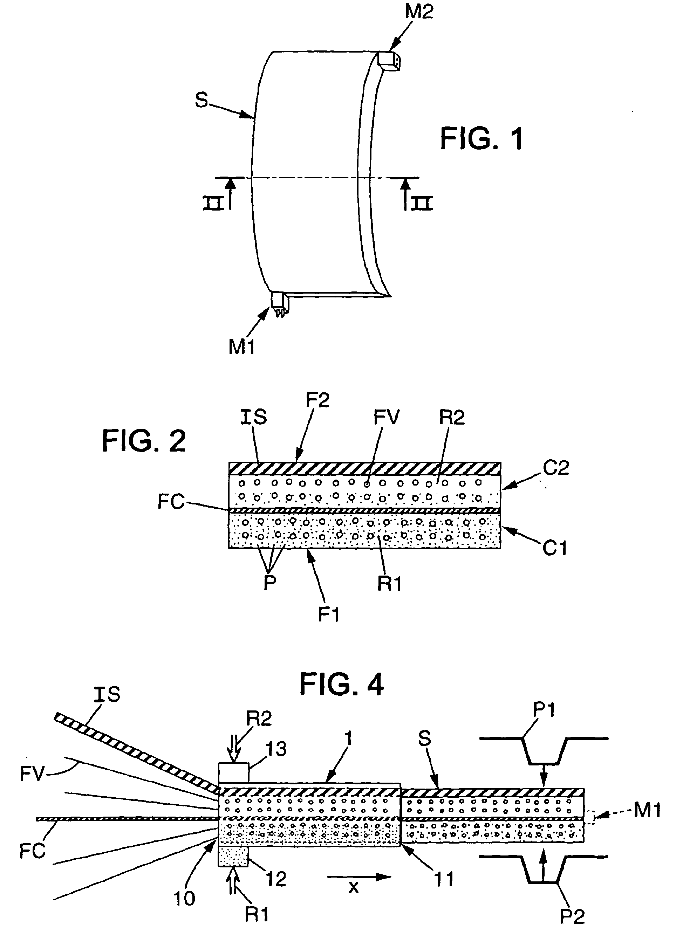

On se réfère tout d'abord à la figure 1, sur laquelle une structure chauffante S présente une forme générale de plaque, sensiblement courbe. La structure chauffante S est alimentée électriquement par l'intermédiaire d'au moins un module de connexion M1, prévu sur un bord d'extrémité de la structure chauffante S.

Cette structure chauffante S peut être destinée au chauffage d'habitacles domestiques, en tant que radiateurs de maison connectés au réseau électrique. Dans d'autres applications, la structure chauffante S peut être utilisée comme structure de renfort (telle qu'une poutre de renfort, ou encore une plinthe) dans des locaux industriels, domestiques, ou encore publics. Dans une telle application, il peut être prévu, par exemple, une pluralité de structures chauffantes S, en forme de panneaux de chauffage, assemblés les uns aux autres par des modules de connexion électriques M1 et M2, pour former le revêtement d'un mur, ou encore un ensemble de poutres de renfort d'une construction dans un local industriel ou public (abri d'autobus ou autre).

Dans d'autres applications, la structure chauffante S trouve un intérêt non négligeable dans des sièges chauffants de stadiums, ou encore en tant que baignoires d'habitat (permettant ainsi de conserver une eau à température désirée).

Une autre application particulièrement avantageuse concerne le domaine de l'automobile. Une structure chauffante, par rayonnement, du type représenté sur la figure 1, peut être utilisée pour le désembuage d'un pare-brise, une telle structure faisant partie intégrante ou jouant le rôle d'une planche de bord de l'habitacle du véhicule automobile, ou encore jouant le rôle de renforts latéraux dans l'habitacle.

On se réfère maintenant à la figure 2 sur laquelle la structure chauffante au sens de la présente invention comporte un film chauffant FC en sandwich entre deux couches de renfort C1 et C2. Chaque couche de renfort C1 et C2 comporte un réseau FV de fibres de verre ou de carbone noyé chacun dans des résines respectives R1 et R2, qui polymérisent par élévation de température, par exemple dans un moule de pultrusion comme on le verra plus loin.

Plus particulièrement, la couche de renfort C1 comporte une résine R1 chargée en particules P qui jouent le rôle d'additifs rayonnants. Par exemple, de tels additifs rayonnants peuvent être des particules de fonte d'aluminium, de bois, de vermiculite. Dans une réalisation avantageuse, ces particules sont minérales, telles que des particules de marbre. Dans un mode de réalisation préféré, ces additifs rayonnants sont des particules de plâtre, le plâtre présentant au moins les avantages suivants :
- à haute température, il dégage de l'eau, ce qui confère à la structure chauffante S un effet de retardateur de flamme ;
- il est de faible coût ;
- il confère à la structure un gain de rigidité ; et
- ses propriétés de rayonnement de la chaleur confèrent à la structure chauffante S son caractère rayonnant souhaité.

Ainsi, de tels additifs pulvérulents, à haut pouvoir émissif, confèrent à la structure chauffante S des propriétés de chauffage, par rayonnement. L'application d'une telle structure rayonnante S est avantageuse (mais non limitée) dans des lieux publics ouverts, dans lesquels un courant d'air circule régulièrement et pour lesquels des coûts de chauffage par convection seraient prohibitifs. De plus, le chauffage par rayonnement procure la sensation d'un chauffage doux, sans brassage d'air, par l'émission d'ondes électromagnétiques dans le domaine de l'infrarouge. Les murs, les sols et autres éléments d'un habitacle, dès réception de ces ondes, les "convertissent" en chaleur.

Dans les applications sus-mentionnées de la structure chauffante selon la présente invention, il est préférable que la structure S ne rayonne que par l'une de ses faces F1 de manière à limiter la consommation électrique et conserver ainsi un taux satisfaisant de conversion d'énergie électrique en chaleur. A cet effet, la structure chauffante S comporte en outre une couche isolante IS, sur sa face F2, opposée à la face rayonnante F1. Par exemple, l'isolant IS peut être une feuille de laine minérale, telle que de la laine de verre ou, préférentiellement, de la laine de roche.

Le film chauffant FC contient au moins une résistance électrique. A cet effet, ce film chauffant FC peut être formé d'un film plastique sur lequel sont sérigraphiées une ou plusieurs résistances. En variante, l'utilisation d'un tissu de fibres carbonées peut aussi être envisagée. Dans une autre variante encore, il peut s'agir d'un réseau de fils conducteurs. De façon générale, on indique que le film chauffant FC est constitué d'un ou plusieurs types de matériaux électriquement résistifs, destinés à être alimentés électriquement et capables de produire une chaleur par effet Joule lorsqu'ils sont parcourus par un courant électrique.

Avantageusement, l'utilisation d'un tissu de fibres carbonées assure une imprégnation satisfaisante des résines R1 et R2 dans lesquelles il est noyé, ce qui permet d'obtenir une bonne adhésion du film chauffant FC dans la structure chauffante S.

Ainsi, dans la réalisation selon laquelle le film chauffant est un film sérigraphié, des ouvertures aménagées dans le film sont avantageusement prévues. Les résines R1 et R2 peuvent alors s'interpénétrer pendant l'étape d'injection dans le moule.

Par ailleurs, il peut être prévu en outre un film chauffant FC réalisé sous la forme d'un tissu de fibres, par exemple des fibres de verre, dans lequel est surpiqué un fil électriquement conducteur, ou encore dont les fibres sont imprégnées d'un polymère conducteur.

Le profilé composite rayonnant que forme ainsi la structure chauffante S présente une première face F1 à haut pouvoir rayonnant et une seconde face opposée F2, isolante, tandis que les renforts FV assurent une tenue mécanique satisfaisante de la structure S. Les particules P, préférentiellement de plâtre et majoritaires dans la couche de renfort C1, rayonnante, assurent à la fois un haut pouvoir émissif et une bonne tenue mécanique de la structure S. Sur la figure 2, on remarque en particulier que la couche de renfort C2, comprenant l'isolant IS, comporte sensiblement moins de particules rayonnantes P que la couche de renfort C1 destinée à rayonner. Dans le procédé de fabrication de la structure chauffante S au sens de la présente invention, la première résine R1 est initialement chargée en particules P, pour former la couche rayonnante C1, tandis que la résine R2, plus fluide, ne comprend pas de tels additifs rayonnants.

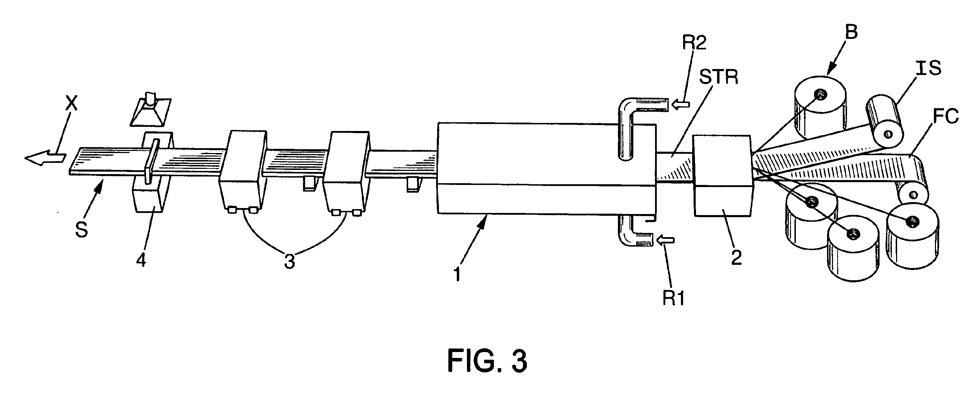

On se réfère maintenant à la figure 3 pour décrire un procédé de fabrication de la structure S, par pultrusion dans une réalisation préférée.

Le procédé de pultrusion permet la fabrication de profilés à matrice polymère, armés de renforts continus. Les renforts, tels que des tissus ou des fibres de verre ou de carbone FV, proviennent de bobines B placées sur des supports en tête de la machine de pultrusion. Par ailleurs, le film chauffant, dans une réalisation où il se présente sous la forme d'un tissu de fibres carbonées FC, ainsi que la feuille isolante IS, dans la réalisation où elle se présente sous la forme d'une feuille de laine de roche, sont disposés sur des supports qui confèrent une liberté de rotation pour que l'ensemble des bobines se déroulent continûment. Des guides et râteliers 2 orientent les fibres, le film chauffant et la feuille isolante en les positionnant sous une tension sensiblement identique pour constituer le squelette du future composite formant la structure S. Présentés ainsi sous une forme organisée, ils sont imprégnés de résines R1 et R2 à l'entrée d'une filière 1 qui assure le maintien de l'ensemble et la polymérisation des résines par chauffage. Cette filière se présente donc sous la forme d'un moule de chauffage (ci-après dit "moule de pultrusion"), dans lequel sont injectées les première R1 et seconde R2 résines précitées. Ces première et seconde résines se durcissent par polymérisation dans le moule de pultrusion. L'avancement des différents constituants, le long de l'axe x, est assuré par un dispositif de traction 3 situé en aval du moule de pultrusion 1. Le poste 4 de l'installation de pultrusion comporte un dispositif de découpe et de ventilation pour récupérer ainsi la structure chauffante S pour laquelle il ne reste plus qu'à prévoir un ou plusieurs modules de connexion M1 et M2 de son film chauffant FC.

Avantageusement, les résines injectées (flèches R1 et R2) dans le moule de pultrusion 1 sont thermoplastiques. Dans cette réalisation, le poste 4 de l'installation de pultrusion peut être précédé d'un poste de ceintrage du profilé composite en sortie du moule 1, de manière à lui conférer une forme choisie, incurvée ou autre. A cet effet, des matrices polymères destinées à former les couches de protection C1 et C2, par imprégnation des fibres ou tissus FV de verre ou de carbone, peuvent être avantageusement des résines thermoplastiques du type PBT (pour "polybutylène téréphalate") ou encore de type polycaprolactone, permettant d'effectuer, en sortie du moule de pultrusion, un thermoformage de la structure.

Avantageusement, la pultrusion permet d'obtenir des formes de profilés aussi bien planes que courbes, ou encore des formes plus complexes, de sections pleines ou creuses.

On se réfère maintenant à la figure 4 dans laquelle la stratification STR de la figure 3, formée par la feuille isolante IS, le film chauffant FC et les fibres de verre ou de carbone FV, par exemple sous forme tissée, pénètre dans l'extrémité d'entrée 10 du moule de pultrusion 1. La stratification comportant le film isolant IS et le film chauffant FC, disposés parmi les fibres de renfort FV, pénètre ainsi dans le moule pour être imprégnée de résines R1 et R2. On prévoit alors une double injection de résines (flèches R1 et R2) par des ouvertures 12 et 13 formées dans le moule 1, sur des parois opposées et respectivement en regard du film chauffant FC et de la feuille isolante IS. La résine R2 est standard (de type PBT ou encore de type époxy, ou autre). Elle est injectée, ainsi sans additifs rayonnants, au contact de l'isolant thermique IS, dans la partie supérieure du moule 1. Une imprégnation satisfaisante est ainsi garantie et une meilleure isolation thermique est assurée dans cette zone de la structure chauffante S en formation. L'autre résine R1 est injectée dans une partie inférieure du moule 1. La résine R1 est plus visqueuse et chargée en additifs rayonnants pour constituer la matrice rayonnante du profilé. Préférentiellement, la résine R1 enrobe sensiblement le film chauffant FC qui comporte avantageusement des ouvertures pour favoriser une interpénétration des deux résines R1 et R2.

Préférentiellement, la résine fluide R2 est injectée par l'ouverture 13 dans une paroi supérieure du moule 1, tandis que la résine R1, visqueuse, est injectée par l'ouverture 12 disposée dans une paroi inférieure du moule 1, ce qui permet, par gravité, de limiter la contamination de la couche thermiquement isolante C2 par les additifs rayonnants. Par ailleurs, on contrôle les débits respectifs des résines R1 et R2 en fonction de la vitesse de progression de la stratification STR dans le moule de pultrusion 1, en fonction de la charge de la résine R1 en additifs rayonnants et en fonction de la vitesse de polymérisation des résines à la température du moule.

Typiquement, pour une vitesse comprise sensiblement entre 0,5 et 1 m/minute de la stratification dans le moule, on prévoit un débit de la résine fluide R2 d'environ 0,5 à 1,5 1/minute et un débit de la résine visqueuse R1 d'environ 0,5 à 1,5 1/minute pour environ une masse de 900 kg d'additifs rayonnants dans un m³ de résine du type polyester thermodurcissable. Les résines R1 et R2, du type précité, polymérisent dans le moule de pultrusion 1 à des températures de l'ordre de 100 à 150°C.

La structure chauffante S, préformée, est évacuée par une extrémité de sortie 11 du moule de pultrusion 1 et progresse jusqu'à un poste de ceintrage équipé d'une presse comportant des organes de pression P1 et P2, pour conférer à la structure S une forme choisie par ceintrage, dans une réalisation préférée selon laquelle les résines R1 et R2 sont thermoplastiques.

Enfin, le procédé de fabrication de la structure chauffante S se poursuit par la mise en place d'un module de connexion M1 pour alimenter électriquement le film chauffant FC.

Bien entendu, la présente invention ne se limite pas à la forme de réalisation décrite ci-avant à titre d'exemple ; elle s'étend à d'autres variantes.

Ainsi, on comprendra que, dans une réalisation simplifiée de la structure chauffante S, l'une des épaisseurs de renforts FV peut être supprimée dans la couche C1 ou dans la couche C2. Toutefois, il est avantageux de conserver les renforts électriquement isolants dans la couche rayonnante C1. Dans cette réalisation, une épaisseur de résine R2 peut être conservée entre une feuille thermiquement isolante IS et le film chauffant FC, sans renforts FV.

Dans l'exemple de réalisation ci-avant, on introduit une feuille isolante IS dans la stratification qui est noyée par les résines R1 et R2. Dans une variante, cette feuille isolante peut être supprimée et le caractère isolant de la face F2 de la structure est assuré par l'injection d'une résine R2 chargée elle-même en additifs isolants, tels que des particules de céramique. La résine R2, même chargée par de tels additifs isolants, reste plus fluide que la résine R1 chargée en additifs rayonnants tels que des particules de plâtre. Bien entendu, on comprendra que la face isolante F2 de la structure peut en outre comprendre à la fois une feuille isolante IS et une résine R2 chargée en additifs isolants du type précité, dans des applications où il est avantageux de parfaire l'isolation de la face F2 de la structure chauffante au sens de l'invention. Ces additifs isolants ne sont pas représentées sur les figures par souci de clarté mais ils sont majoritaires près de la face isolante F2.

On a décrit ci-avant un procédé de fabrication, avantageusement par pultrusion, de la structure chauffante S. En variante, des profilés composites pour former la structure chauffante S peuvent être élaborés par toute autre technique de mise en forme, telle que le moulage par réaction (ou RIM pour "Reaction Injection Molding"), le moulage par compression, de type BMC (pour "Bulk Molding Compound") ou de type SMC (pour "Sheet Molding Compound").

En particulier, dans le cadre de la présente invention, il peut être prévu simplement un moule d'injection de résines R1 et R2 dans lequel est tendue une stratification comportant au moins des fibres de renfort FV et un film chauffant FC. Dans ce moule chauffant, on injecte par deux ouvertures opposées une résine R1 visqueuse et chargée en additifs rayonnants P et une résine plus fluide R2 pour assurer la solidarisation de l'ensemble des éléments de la structure.

## Revendications

1. procédé de fabrication d'une structure chauffante par rayonnement, la structure comprenant :
- une couche chauffante (FC) comportant au moins une résistance électrique destinée à être alimentée électriquement pour produire un chauffage par effet Joule,
- une couche rayonnante (C1), et
- une couche sensiblement isolante thermiquement (IS), la couche isolante et la couche rayonnante, étant fixées de part et d'autre de la couche chauffante,
procédé dans lequel :
a) on introduit dans un moule (1) une stratification comportant au moins ladite résistance électrique et des renforts (FV),
**caractérisé en ce que :**
b) on injecte dans le moule (1) :
- par une ouverture (12) formée dans une première paroi du moule en regard d'une face de la stratification destinée à former la couche rayonnante, une première résine (R1) chargée en additifs rayonnants et polymérisable dans le moule, et
- par une ouverture (13) formée dans une seconde paroi du moule en regard d'une face de la stratification destinée à former la couche isolante, une seconde résine (R2) plus fluide que la première résine et polymérisable dans le moule,
**en ce que**, ledit moule est un moule de pultrusion comprenant une extrémité d'entrée (10) et une extrémité de sortie (11), et, à l'étape b), on fait progresser ladite stratification entre les deux extrémités du moule tout en injectant lesdites première et seconde résines, et **en ce que**, pour une vitesse de progression comprise sensiblement entre 0,5 et 1 m/minute de la stratification dans le moule, on prévoit un débit de la seconde résine (R2) d'environ 0,5 à 1,5 1/minute et un débit de la première résine (R1) d'environ 0,5 à 1,5 1/minute pour environ une masse de 900 kg d'additifs rayonnants dans un m³ de la première résine,
ladite progression étant suffisamment rapide par rapport aux débits respectifs d'injection des première et seconde résines pour limiter la diffusion des additifs rayonnants vers ladite seconde paroi du moule, tout en autorisant une diffusion des additifs rayonnants dans la couche chauffante.

2. Procédé selon la revendication 1, dans lequel on noie dans la seconde résine un isolant thermique (IS), cet isolant thermique étant disposé, dans ladite stratification, face à ladite seconde paroi du moule pour former ladite couche isolante.

3. Procédé selon l'une des revendications précédentes,
dans lequel, la couche isolante et la couche rayonnante étant chacune renforcées, ladite stratification comporte :
- des renforts (FV),
- au moins une résistance électrique (FC),
- et des renforts (FV).

4. Procédé selon la revendication 3, prise en combinaison avec la revendication 2, dans lequel ladite stratification comporte :
- des renforts,
- au moins une résistance électrique,
- des renforts,
et un isolant thermique (IS).

5. Procédé selon l'une des revendications 3 et 4, dans lequel l'isolant thermique (IS) est une feuille de laine minérale, telle que de la laine de roche.

6. Procédé selon l'une des revendications précédentes,
dans lequel la seconde résine (R2) comporte des additifs isolants.

7. Procédé selon l'une des revendications précédentes,
dans lequel les additifs rayonnants sont des particules de plâtre.

8. Procédé selon l'une des revendications précédentes,
dans lequel lesdits renforts (FV) sont des fibres, telles que des fibres de verre.

9. Procédé selon l'une des revendications précédentes,
dans lequel ladite résistance électrique (FC) consiste en un réseau de fils métalliques.

10. Procédé selon l'une des revendications 1 à 8, dans lequel ladite résistance électrique (FC) consiste en un tissu de fibres au moins en partie électriquement conductrices.

11. Procédé selon l'une des revendications 1 à 8, dans lequel ladite résistance électrique (FC) consiste en un film sérigraphié.

12. Procédé selon l'une des revendications précédentes,
dans lequel lesdites première et seconde résines sont thermoplastiques.

## Claims

1. A process for manufacturing a radiation heating structure, the structure comprising:
- a heating layer (FC) comprising at least one electrical resistor intended to be electrically powered in order to produce Joule heating;
- a radiating layer (C1); and
- a substantially thermally insulating layer (IS),
the insulating layer and the radiating layer being fixed on either side of the heating layer,
in which process:
a) a laminate comprising at least said electrical resistor and reinforcements (FV) is introduced into a mold (1),
**characterized in that:**
b) injected into the mold (1) :
- via an opening (12) formed in a first wall of the mold opposite one face of the laminate intended to form the radiating layer, is a first resin (R1) that is filled with radiating additives and can be cured in the mold; and
- via an opening (13) formed in a second wall of the mold opposite one face of the laminate intended to form the insulating layer, is a second resin (R2) that is more fluid than the first resin and can be cured in the mold;
and **in that** said mold is a pultrusion mold having an entry end (10) and an exit end (11) and in which, in step b), said laminate is made to advance between the two ends of the mold while said first and second resins are being injected,
and **in that**, for a speed of advance of the laminate through the mold substantially comprised between 0.5 and 1 m/minute, a flow rate of the second resin (R2) of about 0.5 to 1.5 l/minute and a flow rate of the first resin (R1) of about 0.5 and 1.5 1/minute for a mass of about 900 kg of radiating additives per m3 of the first resin are provided,
said advance being sufficiently rapid compared to the respective injection rates of the first and second resins to limit any diffusion of the radiating additives into the second wall of the mold, while ensuring diffusion of the radiating additives into the heating layer.

2. The process as claimed in claim 1, in which a thermal insulator (IS) is embedded in the second resin, this thermal insulator being placed, in said laminate, facing said second wall of the mold in order to form said insulating layer.

3. The process as claimed in one of the preceding claims, in which, when the insulating layer and the radiating layer are each reinforced, said laminate comprises:
- reinforcements (FV);
- at least one electrical resistor (FC); and
- reinforcements (FV).

4. The process as claimed in claim 3, taken in combination with claim 2, in which said laminate comprises:
- reinforcements;
- at least one electrical resistor;
- reinforcements; and
a thermal insulator (IS).

5. The process as claimed in either of claims 3 and 4, in which the thermal insulator (IS) is a sheet of mineral wool, such as rock wool.

6. The process as claimed in one of the preceding claims, in which the second resin (R2) includes insulating additives.

7. The process as claimed in one of the preceding claims, in which the radiating additives are plaster particles.

8. The process as claimed in one of the preceding claims, in which said reinforcements (FV) are fibers, such as glass fibers.

9. The process as claimed in one of the preceding claims, in which said electrical resistor (FC) consists of a network of metal wires.

10. The process as claimed in one of claims 1 to 8, in which said electrical resistor consists of a fabric of at least partly electrically conductive fibers.

11. The process as claimed in one of claims 1 to 8, in which said electrical resistor (FC) consists of a screen-printed film.

12. The process as claimed in one of the preceding claims, in which said first and second resins are thermoplastics.

## Patentansprüche

1. Verfahren zur Herstellung einer Strahlungsheizungsstruktur, die Struktur umfassend:
- eine Heizungsschicht (FC), die mindestens einen elektrischen Widerstand beinhaltet, der bestimmt ist elektrisch versorgt zu werden zum Erzeugen einer Heizung durch Joule'schen Effekt,
- eine Strahlungsschicht (C1), und
- eine deutlich thermisch isolierende Schicht (IS),
wobei die isolierende Schicht und die Strahlungsschicht beiderseits der Heizungsschicht angebracht sind,
wobei in dem Verfahren:
a) eine Schichtung, welche wenigstens den elektrischen Widerstand und Verstärkungen (FV) beinhaltet, in eine Form (1) eingeführt wird,
**dadurch gekennzeichnet, dass:**
b) in die Form (1) injiziert wird:
- ein erstes Harz (R1), das mit Strahlungszusätzen beladen ist und in der Form polymerisierbar ist, durch eine Öffnung (12), die gebildet wird in einer ersten Wand der Form hinsichtlich einer Seite der Schichtung, die bestimmt ist die Strahlungsschicht zu bilden, und
- ein zweites Harz (R2), das flüssiger ist als das erste Harz und in der Form polymerisierbar ist, durch eine Öffnung (13), die gebildet wird in einer zweiten Wand der Form hinsichtlich einer Seite der Schichtung, die bestimmt ist die isolierende Schicht zu bilden,
und **dadurch**, dass die Form eine Pulltrusionsform ist, die ein Eingangsende (10) und ein Ausgangsende (11) umfasst, und dass, im Schritt b), die Schichtung durch die zwei Enden der Form beim Injizieren des ersten und zweiten Harzes befördert wird,
und **dadurch**, dass ein Durchfluss des zweiten Harzes (R2) von ungefähr 0,5 bis 1,5 1/min und ein Durchfluss des ersten Harzes (R1) von ungefähr 0,5 bis 1,5 1/min für ungefähr eine Masse von 900 kg von Strahlungszusätzen in einem m³ des ersten Harzes vorgesehen wird, für eine Beförderungsgeschwindigkeit der Schichtung in der Form, die etwa zwischen 0,5 und 1 m/min enthalten ist,
wobei die Beförderung ausreichend schnell ist im Verhältnis zu den entsprechenden Durchflüssen der Injizierung des ersten und zweiten Harzes zum Begrenzen der Diffusion der Strahlungszusätze gegenüber der zweiten Wand der Form, unter Zulassen einer Diffusion der Strahlungszusätze in die Heizungsschicht.

2. Verfahren nach Anspruch 1, in dem ein thermischer Isolators (IS) in dem zweiten Harz versenkt wird, wobei der thermische Isolator angeordnet ist, in der Schichtung, gegenüber der zweiten Wand der Form, um die isolierende Schicht zu bilden.

3. Verfahren nach einem der vorhergehenden Ansprüche, in welchem die isolierende Schicht und die Strahlungsschicht jeweils verstärkt sind, wobei die Schichtung beinhaltet:
- Verstärkungen (FV),
- wenigstens einen elektrischen Widerstand (FC),
- und Verstärkungen (FV).

4. Verfahren nach Anspruch 3 in Kombination mit Anspruch 2, in welchem die Schichtung beinhaltet:
- Verstärkungen,
- wenigstens einen elektrischen Widerstand,
- Verstärkungen,
und einen thermischen Isolator (IS).

5. Verfahren nach einem der Ansprüche 3 und 4, in welchem der thermische Isolator (IS) eine Folie aus Mineralwolle ist, wie aus Steinwolle.

6. Verfahren nach einem der vorhergehenden Ansprüche, wobei das zweite Harz (R2) isolierende Zusätze beinhaltet.

7. Verfahren nach einem der vorhergehenden Ansprüche, in welchen die Strahlungszusätze Gipspartikel sind.

8. Verfahren nach einem der vorhergehenden Ansprüche, in welchem die Verstärkungen (FV) Fasern sind, wie Glasfasern.

9. Verfahren nach einem der vorhergehenden Ansprüche, in welchem der elektrische Widerstand (FC) aus einem Netz von metallischen Drähten besteht.

10. Verfahren nach einem der Ansprüche 1 bis 8, in welchem der elektrische Widerstand (FC) aus einem Gewerbe von wenigstens teilweise elektrisch leitfähigen Fasern besteht.

11. Verfahren nach einem der Ansprüche 1 bis 8, in welchem der elektrische Widerstand (FC) aus einem Siebdruckfilm besteht.

12. Verfahren nach einem der vorhergehenden Ansprüche, in welchem das erste und zweite Harz thermoplastisch sind.
